# EUROPÄISCHE PATENTANMELDUNG

(11) **EP 1 437 541 A1**
(43) Veröffentlichungstag der Anmeldung: **14.07.2004**
(21) Anmeldenummer: 03405003.9
(22) Anmeldetag: 07.01.2003
(51) Int. Cl.: F16N 31/00, B65D 1/34, B03B 13/00

(54) **Wanne und Verfahren zu ihrem Gebrauch**

(71) Anmelder: Sager, Bruno, 6123 Geiss (CH)
(72) Erfinder: Sager, Bruno, 6123 Geiss (CH)
(74) Vertreter: Wagner, Wolfgang H.

(57) **Zusammenfassung**

Eine Wanne zum Auffangen von Flüssigkeit weist eine Bodenplane (4) auf, deren Rand auf einem von zwei nebeneinander liegenden, über Anschlüsse (3a,b) aufblasbaren Schläuchen (2a,b) gebildeten Rahmen (1) aufliegt. Sie besteht aus einer dichten Grundschicht aus Folie, einer ebensolchen Deckschicht und einer dazwischenliegenden andersfarbigen luftdurchlässigen Zwischenschicht aus Gewebe. Der zwischen den erstgenannten Schichten liegende Bereich ist durch einen Ueberwachungsanschluss (8) mit dem Aussenraum verbunden. Zur sofortigen Feststellung allfälliger Beschädigungen von Grundschicht oder Deckschicht kann am Ueberwachungsanschluss (8) z.B. ein Unterdruck angelegt und überwacht werden. Zur Erleichterung des Entfernens von ausgelaufener Flüssigkeit kann durch den gleichen Ueberwachungsanschluss (8) Luft eingepumpt und die Deckschicht z.T. abgehoben werden.

## Beschreibung

### Technisches Gebiet

Die Erfindung betrifft eine Wanne zum Auffangen von Flüssigkeiten. Eine derartige Wanne kann etwa beim Befüllen eines Tankwagens zur Sicherung gegen Verschmutzung des Grundwassers durch überfliessende Chemikalien oder Oel eingesetzt werden. Ausserdem werden Verfahren zum Gebrauch erfindungsgemässer Wannen angegeben.

### Stand der Technik

Bei bekannten gattungsgemässen Wannen, die z.B. eine einfache, aus Folie bestehende Bodenplane aufweisen, sind Beschädigungen schwer feststellbar, bevor sie sich zu einem Leck entwickelt haben. Es können daher unbemerkt grössere Flüssigkeitsmengen auslaufen, was zu schwerer Verschmutzung der Umwelt, insbesondere des Grundwassers führen kann.

### Darstellung der Erfindung

Der Erfindung liegt die Aufgabe zu Grunde, eine gattunggemässe Wanne anzugeben, welche derart ausgebildet ist, dass Beschädigungen in der Bodenplane bereits feststellbar sind, bevor sie sich zu einem durchgehenden Leck ausgeweitet haben. Diese Aufgabe wird durch die Merkmale im kennzeichnenden Teil des Anspruchs 1 gelöst.

Bei der erfindungsgemässen Wanne sind bereits Beschädigungen, die noch kein Leck verursachen, leicht feststellbar. Bei einem der angegebenen Verfahren zum Gebrauch werden solche Bechädigungen einfach und zuverlässig festgestellt. Ausserdem wird ein weiteres Verfahren zum Gebrauch der erfindungsgemässen Wanne angegeben, welches die Entfernung ausgelaufener Flüssigkeit wesentlich erleichtert.

### Kurze Beschreibung der Zeichnungen

Im folgenden wird die Erfindung anhand von Figuren, welche lediglich ein Ausführungsbeispiel darstellen, näher erläutert. Es zeigen
- Fig. 1: schematisch eine Draufsicht auf eine erfindungsgemässe Wanne,
- Fig. 2: eine Seitenansicht eines Eckbereichs gemäss II in Fig. 1,
- Fig. 3: schematische einen Schnitt durch den Randbereich gemäss III-III in Fig. 1,
- Fig. 4: schematisch einen Schnitt durch die Bodenplane der erfindungsgemässen Wanne und
- Fig. 5a-c: schematisch Schnitte durch die erfindungsgemässe Wanne in verschiedenen Gebrauchszuständen.

### Wege zur Ausführung der Erfindung

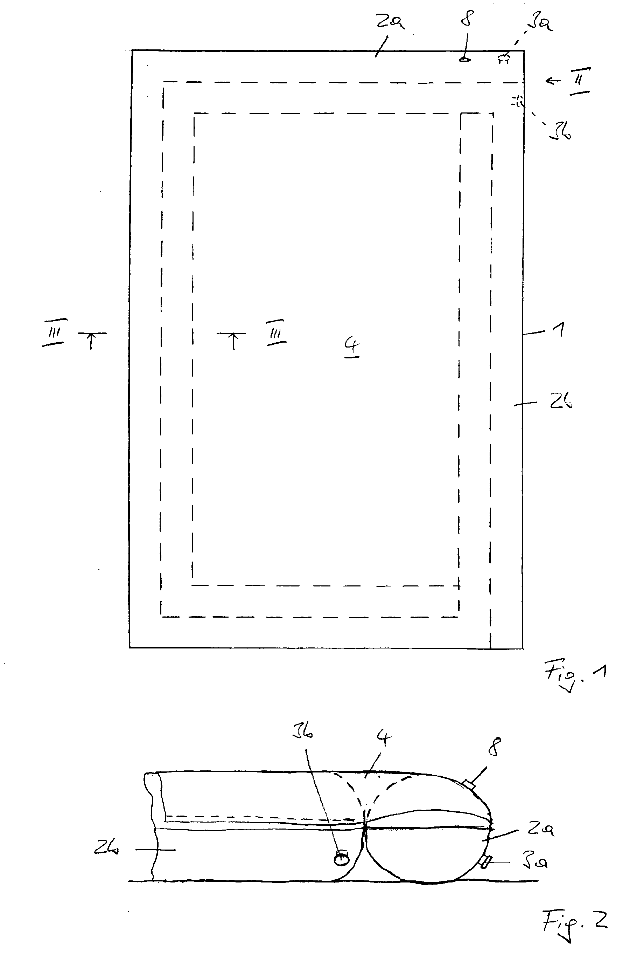

Die Wanne umfasst einen rechteckigen Rahmen 1, der von zwei nebeneinander angeordneten aufblasbaren Schläuchen gebildet wird. Ein erster Schlauch 2a liegt (Fig. 1) längs der oberen Breitseite, der linken Längsseite und der unteren Breitseite an der Aussenseite des Rahmens, während ein zweiter Schlauch 2b dort an der Innenseite liegt. In der Ecke zwischen der unteren Breitseite und der rechten Längsseite wechselt der erste Schlauch 2a zwischen den Enden des zweiten Schlauchs 2b, der längs der rechten Längsseite an der Aussenseite liegt, auf die Innenseite. Die Schläuche 2a,b bilden voneinander getrennte abgeschlossene Luftkammern. Da sich jeder von ihnen über die ganze Länge des Rahmens 1 erstreckt, erfüllt derselbe seine Aufgabe auch dann noch, wenn einer der beiden Schläuche 2a,b leck ist. Die Schläuche 2a,b können aus plastifiziertem Gewebe bestehen.

Der erste Schlauch 2a und der zweite Schlauch 2b weisen jeweils an der Aussenseite etwas unterhalb der Mittellinie einen als Anschlussstutzen mit einem Ventil ausgebildeten Anschluss 3a bzw. 3b auf. Beide Anschlüsse sind nahe der oberen rechten Ecke angeordnet, der erste Anschluss 3a an der oberen Breitseite, wo der erste Schlauch 2a die Aussenseite des Rahmens 1 bildet und der zweite Anschluss 3b an der rechten Längsseite, wo der zweite Schlauch 2b die Aussenseite bildet. Auf diese Weise sind beide Anschlüsse 3a,b jeweils an der Aussenseite des Rahmens 1 leicht zugänglich angebracht und zugleich nahe beisammen, was die Bedienung erleichtert.

Eine rechteckige Bodenplane 4 bedeckt sowohl im wesentlichen die Oberseite des Rahmens 1 als auch die von demselben umgebene Fläche. Ihre Ränder sind an der Aussenseite des Rahmens 1 etwas oberhalb der Mittellinie desselben jeweils mit dem aussenliegenden Schlauch verbunden, insbesondere verschweisst, so dass sie die Anschlüsse 3a,b freilässt. Die Bodenplane 4 besteht (Fig. 4) aus drei durchgehenden übereinanderliegenden, aber ausser längs des Randes, wo sie verschweisst sind, unverbundenen Schichten, unten einer luft- und flüssigkeitsdichten Grundschicht 5, oben einer ebenfalls luft- und flüssigkeitsdichten Deckschicht 6 und dazwischen einer luftdurchlässigen Zwischenschicht 7. Die undurchlässigen Schichten, also die Grundschicht 5 und die Deckschicht 6, werden jeweils von einer Folie von z.B. 0,8mm Dicke, die vorzugsweise aus einem Thermoplasten oder Kautschuk besteht, gebildet, die Zwischenschicht 7 dagegen von einem Gewebe, vorzugsweise aus Polyester. Sie sticht farblich sowohl von der Grundschicht 5 als auch von der Deckschicht 6 ab, ist z.B. weiss, während die letzteren schwarz sind, so dass ein Loch in einer der letzteren leichter zu sehen ist. Die Grundschicht 5 ist an der Innenseite des Rahmens 1 etwas oberhalb der Mittellinie desselben jeweils mit dem innenliegenden Schlauch verbunden.

Die Bodenplane 4 weist einen Ueberwachungsanschluss 8 auf, eine verschliessbare Oeffnung, welche den zwischen der Grundschicht 5 und der Deckschicht 6 liegenden, die Zwischenschicht 7 enhaltenden, im übrigen luft- und flüssigkeitsdicht abgeschlossenen Bereich durch die Deckschicht 6 hindurch mit dem Aussenraum verbindet. Der Ueberwachungsanschluss 8 ist in der Nähe des Randes der Bodenplane 4 angebracht, wo dieselbe auf dem dort aussenliegenden Schlauch 2b aufliegt, und zwar im Bereich der rechten oberen Ecke, also in der Nähe der beiden Anschlüsse 3a,b der Schläuche 2a,b angeordnet, was wiederum die Bedienung vereinfacht. Die Wanne kann auch andere Form aufweisen als dargestellt, z.B. quadratisch oder rund sein. Der Rahmen kann auch aus lediglich einem Schlauch bestehen.

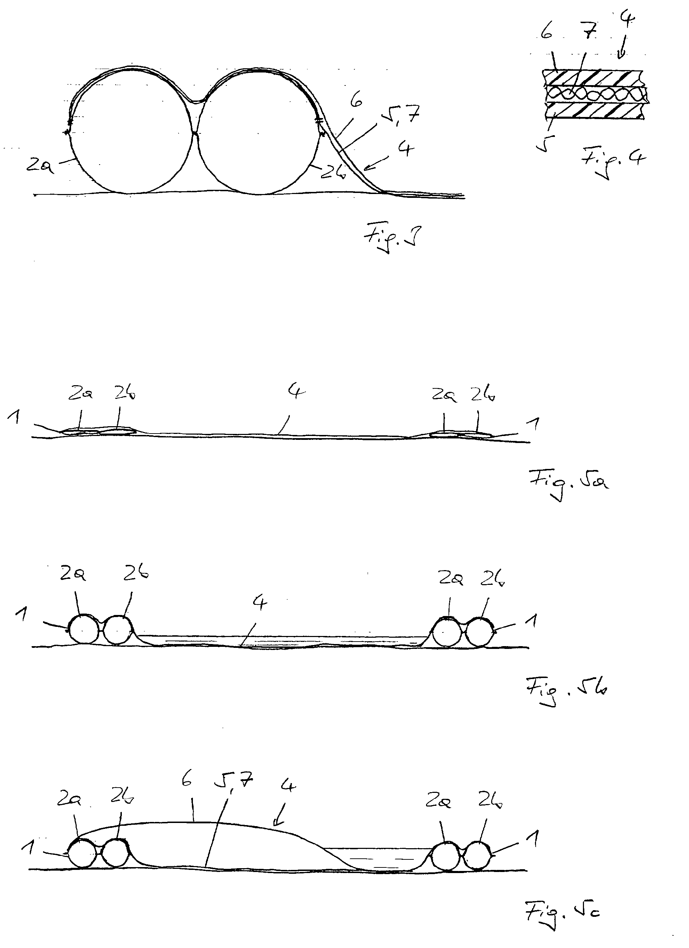

Zum Gebrauch wird die Wanne zuerst mit leeren Schläuchen 2a,b auf dem Boden ausgelegt (Fig. 5a). Dann kann z.B. ein Tankwagen so auf sie auffahren, dass er auf der Bodenplane 4 steht und vom Rahmen 1 umgeben ist. Anschliessend werden die Schläuche 2a,b aufgeblasen und dadurch der Rand der Bodenplane 4 angehoben, so dass sich eine eigentliche Wanne bildet (Fig. 5b). Am Ueberwachungsanschluss 8 wird eine Pumpe angeschlossen, die einen Unterdruck im zwischen der Grundschicht 5 und der Deckschicht 6 liegenden Bereich aufrechterhält, der zugleich überwacht wird. Dank der Zwischenschicht 7 können dabei die Grundschicht 5 und die Deckschicht 6 nicht vom Unterdruck so gegeneinandergezogen werden, dass ein Teilbereich luftdicht vom Ueberwachungsanschluss 8 abgeschottet wäre.

Tritt nun in der Grundschicht 5 oder in der Deckschicht 6 ein Loch auf, so verursacht dies einen Druckanstieg am Ueberwachungsanschluss 8, der sofort festgestellt wird, also zu einem Zeitpunkt, wo die andere der beiden undurchlässigen Schichten in der Regel noch dicht ist, also noch kein Leck in der Bodenplane 4 vorliegt. Statt des Unterdrucks kann auch ein leichter Ueberdruck angelegt und überwacht werden. Auch in diesem Fall stellt die Zwischenschicht 7 sicher, dass zwischen dem Ueberwachungsanschluss 8 und einem allfälligen Loch in der Grundschicht 5 oder der Deckschicht 6 stets eine luftdurchlässige Verbindung besteht.

Falls z.B. beim Befüllen des Tankwagens Flüssigkeit übergeflossen ist und sich auf der Bodenplane 4 angesammelt hat, so kann durch den Ueberwachungsanschluss 8 Luft in den zwischen der Grundschicht 5 und der Deckschicht 6 liegenden Bereich gepumpt werden. Dies führt dazu, dass die Deckschicht 6 z.B. in den etwas höher oder dem Ueberwachungsanschluss 8 näher liegenden Teilbereichen abgehoben wird und die Flüssigkeit sich stärker in den übrigen Teilbereichen sammelt, wo sie dann höher steht und leichter abgepumpt werden kann.

Nach dem Befüllen des Tankwagens werden die Anschlüsse 3a,b geöffnet und die Luft entweicht. Die Schläuche 2a,b liegend wieder flach auf dem Boden wie in Fig. 5a dargestellt. Der Tankwagen kann nun wegfahren, ohne die Wanne zu beschädigen. Die Wanne kann aufgewickelt und abtransportiert werden.

### Bezugszeichenliste

- 1: Rahmen
- 2a,b: Schläuche
- 3a,b: Anschlüsse
- 4: Bodenplane
- 5: Grundschicht
- 6: Deckschicht
- 7: Zwischenschicht
- 8: Ueberwachungsanschluss

## Patentansprüche

1. Wanne mit einem Rahmen (1) und einer Bodenplane (4), deren Rand am Rahmen (1) befestigt ist, **dadurch gekennzeichnet, dass** die Bodenplane (4) mindestens eine untere dichte Grundschicht (5), eine obere dichte Deckschicht (6) und eine zwischen denselben liegende luftdurchlässige Zwischenschicht (7) umfasst, welche sich jeweils im wesentlichen über die ganze Fläche der Bodenplane (4) erstrecken.

2. Wanne nach Anspruch 1, **dadurch gekennzeichnet, dass** die Grundschicht (5) und die Deckschicht (6) jeweils von einer Folie, die vorzugsweise aus einem Thermoplasten oder Kautschuk besteht, gebildet werden.

3. Wanne nach Anspruch 1 oder 2, **dadurch gekennzeichnet, dass** die Zwischenschicht (7) von einem Gewebe, das vorzugsweise aus Polyester besteht, gebildet wird.

4. Wanne nach einem der Ansprüche 1 bis 3, **dadurch gekennzeichnet, dass** der zwischen der Grundschicht (5) und der Deckschicht (6) liegende Bereich dicht abgeschlossen ist und, vorzugsweise im Randbereich der Bodenplane (4), ein Ueberwachungsanschluss (8) angeordnet ist, über den der besagte Bereich mit dem Aussenraum verbindbar ist.

5. Wanne nach einem der Ansprüche 1 bis 4, **dadurch gekennzeichnet, dass** mindestens die Farbe der Deckschicht (6), vorzugsweise auch die Farbe der Grundschicht (5), von der Farbe der Zwischenschicht (7) abweicht.

6. Wanne nach einem der Ansprüche 1 bis 5, **dadurch gekennzeichnet, dass** die Bodenplane (4) über die Oberseite des Rahmens (1) gezogen und an dessen Aussenseite mit ihm verbunden ist.

7. Wanne nach einem der Ansprüche 1 bis 6, **dadurch gekennzeichnet, dass** der Rahmen (1) mindestens einen aufblasbaren ersten Schlauch (2a) umfasst.

8. Wanne nach Anspruch 7, **dadurch gekennzeichnet, dass** der Rahmen (1) einen ebenfalls aufblasbaren zweiten Schlauch (2b) umfasst, welcher mindestens abschnittsweise parallel zum ersten Schlauch (2a) neben demselben angeordnet ist.

9. Wanne nach Anspruch 8, **dadurch gekennzeichnet, dass** der erste Schlauch (2a) und der zweite Schlauch (2b) sich jeweils im wesentlichen über die ganze Länge des Rahmens (1) erstrecken.

10. Wanne nach Anspruch 9, **dadurch gekennzeichnet, dass** sowohl der erste Schlauch (2a) als auch der zweite Schlauch (2b) jeweils einen Abschnitt aufweist, der an der Aussenseite des Rahmens (1) liegt.

11. Wanne nach Anspruch 10, **dadurch gekennzeichnet, dass** der erste Schlauch (2a) und der zweite Schlauch (2b) jeweils einen Anschluss (3a; 3b) aufweist, welcher an der Aussenseite des Rahmens (1) ausserhalb des Randes der Bodenplane (4) angeordnet ist.

12. Verfahren zum Gebrauch einer Wanne nach einem der Ansprüche 4 bis 11, **dadurch gekennzeichnet, dass** zur Ueberwachung der Dichtigkeit der Bodenplane (4) am Ueberwachungsanschluss (8) derselben ein vom Aussendruck abweichender Druck angelegt und überwacht wird.

13. Verfahren nach Anspruch 12, **dadurch gekennzeichnet, dass** der angelegte Druck ein Unterdruck ist.

14. Verfahren zum Gebrauch einer Wanne nach einem der Ansprüche 4 bis 11, **dadurch gekennzeichnet, dass** zum Sammeln von in dieselbe ausgelaufener Flüssigkeit durch den Ueberwachungsanschluss (8) der Bodenplane (4) ein Fluid, vorzugsweise Luft eingeleitet wird.
